# EUROPEAN PATENT APPLICATION

(11) **EP 4 524 686 A1**
(43) Date of publication of application: **19.03.2025**
(21) Application number: 23197708.3
(22) Date of filing: 15.09.2023
(51) Int. Cl.: G06F 3/01, G05B 19/418, G06T 19/00, G06Q 10/20, G06Q 50/04, G09B 5/14

(54) **METHOD FOR OPERATING A REMOTE AUGMENTED-REALITY-BASED INSPECTION SYSTEM, COMPUTER PROGRAM, COMPUTER STORAGE MEDIUM, AND REMOTE AUGMENTED-REALITY-BASED INSPECTION SYSTEM**

(71) Applicant: Siemens Aktiengesellschaft, 80333 München (DE)
(72) Inventor: Jansch dos Santos Rocha, Marcos, 80803 München (DE); Seibert, Eckhard, 76767 Hagenbach (DE); Stal, Michael, 80469 München (DE)
(74) Representative: Siemens Patent Attorneys

(57) **Abstract**

The invention relates to a method for operating a remote augmented-reality-based inspection system (10), comprising the steps of:
- capturing surroundings (34) of an augmented reality device (12) of the remote augmented-reality-based inspection system (10) with at least one object (16) in the surroundings (34) by the augmented reality device (12), wherein the surroundings (34) are captured in a 360° angle;
- transmitting the captured surroundings (36) to an electronic computing device (14) of the remote augmented-reality-based inspection system (10); and
- providing the transmitted surroundings (34) for a remote inspection of the at least one object (16) for a remote inspector (22) by the electronic computing device (14). Furthermore, the invention relates to a computer program product, a computer-readable storage medium, as well as to a remote augmented-reality-based inspection system (10).

## Description

The present invention relates to a method for operating a remote augmented-reality-based inspection system according to the pending claim 1. Furthermore, the present invention relates to a computer program product, a computer-readable storage medium, as well as to a remote augmented-reality based inspection system.

Inspections of technical production equipment have traditionally been performed primarily on-site. For several years, augmented-reality applications have been used for on-site inspections. In addition, inspectors typically have the ability to access diagnostic data from the operation system.

Travel restrictions during the Covid 19 pandemic made on-site inspections partially impossible and properly remote inspections were used. Remote inspections are more cost-effective, in particular avoiding travel costs, better utilisation of specialists, and furthermore. However, todays remote inspections consists primarily of video conferencing between on-site technicians and remote specialists who talk to each other while a live video stream of the inspection tour is transmitted. The remote specialist is very limited in terms of visualisation of linked data and interaction capabilities.

Furthermore, in todays remote inspections, the video of the inspection tour is sometimes stored for documentation purposes.

It is an object of the present invention to provide a method, a corresponding computer program product, a corresponding computer-readable storage medium, as well as a corresponding remote augmented-reality-based inspection system, by which an improved remote inspection of an object can be realized.

This object is solved by a method, a corresponding computer program product, a corresponding computer-readable storage medium, as well as a corresponding remote augmented-reality-based inspection system according to the independent claims. Advantageous embodiments are presented in the dependent claims.

One aspect of the invention relates to a method for operating a remote augmented-reality-based inspection system. Surroundings of an augmented-reality device of the remote augmented-reality-based inspection system with at least one object in the surroundings is captured by the augmented-reality device, wherein surroundings are captured in a 360° angle. Transmitting the captured surroundings to an electronic computing device of the remote augmented-reality-based inspection system is provided. In particular, the electronic computing device maybe configured as a central electronic computing device, for example in the form of a cloud server. The transmitted surroundings are provided for a remote inspection of the at least one object for a remote inspector by the electronic computing device.

Therefore, the invention enables a fictive remote inspection of technical "production" equipment, where a remote specialist experiences the inspection virtually as if he were on-site with an augmented reality device. The remote specialist can perform the inspection more effectively by selecting the view direction of a 360° camera during the tour and having relevant data displayed as overlays of the image, for example the objects/machine information, thermal image, operation data and furthermore. Furthermore, the remote specialist/inspector has the possibility to give hints to the on-site technician by directly interacting with the overlays that are super imposed on the video, for example by marking/highlighting important objects in the surroundings. This allows the remote inspector to better assess the situation on-site and more effectively guide or assist the on-site technician, for example queues on the on-site technical displays about relevant objects or line of sight. Furthermore, the invention enables a detailed, interactive offline analysis of the data collected during the inspection, for example including visualisation/interaction with the augmented reality overlays in a so called time machine mode.

According to an embodiment the provided surroundings are presented for the remote inspector independently of a current capturing angle of a capturing device of the augmented reality device. Therefore, the remote inspector has the ability to work independently with the captured surroundings independently to current angle/position of the person on-site, capturing the surroundings with the at least one object. Therefore, an improved manner for operating the remote augmented-reality-based inspection system is provided.

In another embodiment additionally at least one characterising parameter of the at least one object is captured by the augmented reality device and transmitted with the captured surroundings. For example, a machine as the object can be captured, and additionally a current working modus/program is captured by the augmented reality device. This information can be additionally transmitted to the electronic computing device and therefore the remote inspector may have more detailed information about a current status of the object. Therefore, an improved manner for operating the remote augmented-reality-based inspection system is provided.

In another embodiment an input of the remote inspector is captured by an input device of the remote augmented-reality-based inspection system and the input is transmitted to the augmented reality device by the electronic computing device. For example, the input device may in the form of a keyboard or a mouse at a computer of the remote augmented-reality-based inspection system. For example the remote inspector can highlight a part of the captured objects. These highlighted parts can then be transmitted to the augmented reality device, and for example displayed as an overlay on the augmented reality device. Therefore, a technician on-site may see the highlighted element and therefore is able to perform different operations at the object proposed by the remote inspector.

In another embodiment the input is displayed on the augmented reality device as an overlay of the displayed surroundings. Therefore it is possible to recap the proposed actions of the remote inspector by the person on-site.

In another embodiment additionally a current temperature in the surroundings is captured by the augmented reality device and the current temperature is transmitted to the electronic computing device. For example, the augmented reality device may comprise an infrared camera for capturing the current temperature. For example, a current temperature of the object can be captured by the augmented reality device. This temperature information may than be transmitted to the electronic computing device and provided for the remote inspector. Therefore, the remote inspector may have more details on the current status of the object and therefore can provide an improved inspection.

According to another embodiment additionally a current depth information of the surroundings is captured by the augmented reality device and the current depth information is transmitted to the electronic computing device. The current depth information can be for example captured by a depth camera of the augmented reality device. The depth information makes it possible to have a more detailed information about the surroundings, in particular of the object. Therefore, the remote inspector may provide an inspection in an improved manner.

According to another embodiment a current sound in the surroundings is captured by the augmented reality device and the current sound is transmitted to the electronic computing device. For example, a microphone device may be attached to the augmented reality device. The microphone then may capture the sound in the surroundings. For example, if the object is a machine a rotational speed of the object can be determined. Furthermore, sounds, which may indicate an error at the object, can be captured and transmitted to the remote inspector. Therefore, the remote inspector may have a more detailed insight of the current status of the object.

In another embodiment the transmitted surroundings are stored in a storing device for a remote inspection in the future. In particular, the remote inspector can interactively examine specific features in a so called time machine mode by fast-forwarding/rewinding or passing the captured surroundings. The time machine mode may allow for a fluid, interactive experience, and is in particular useful, if the remote inspector may have a deeper insight in the current problem. Therefore, the solution for the problem does not have to be found in real time, but the remote inspector is able to have an insight of the current status/problem of the object by inspecting the object offline.

In another embodiment the at least one object transmit at least one current parameter of itself to the electronic computing device and the at least one current parameter is provided for the remote inspector. Therefore, the object may be connected to the electronic computing device. For example, a current temperature and/or a current rotational speed of the object maybe captured by the object itself, and then transmitted to the electronic computing device. Therefore, the remote inspector may have a detailed look inside the status of the object. Therefore, a detailed inspection by the remote inspector can be provided.

In another embodiment a further input of the remote inspector is captured by an input device of the remote augmented-reality-based inspection system and the further input is transmitted to the at least one object by the electronic computing device. For example a setting of the object can be adapted by the remote inspector. Therefore, a solution for a potential problem can be provided by the remote inspector in improved manner.

In particular, the method is a computer-implemented method. Therefore, another aspect of the invention relates to a computer program product comprising program code means for performing a method according to the preceding aspect.

A still further aspect of the invention relates to a computer-readable storage medium comprising at least the computer program product according the preceding aspect.

Furthermore, the present invention relates to a remote augmented-reality-based inspection system, comprising at least one augmented reality device and one electronic computing device, wherein the remote augmented-reality-based inspection system is configured for performing a method according to the preceding aspect. In particular, the method is performed by the remote augmented-reality-based inspection system.

Advantageous embodiments of the method are to regarded as advantageous embodiments of the computer program product, the computer-readable storage medium, as well as the remote augmented-reality-based inspection system. Therefore, the remote augmented-reality-based inspection system comprises means for performing the method according the preceding aspect.

In the context of the present disclosure, an object detection algorithm may be understood as a computer algorithm, which is able to identify and localize one or more objects within a provided input dataset, for example input image, by specifying respective bounding boxes or regions of interest, ROI, and, in particular, assigning a respective object class to each of the bounding boxes, wherein the object classes may be selected from a predefined set of object classes. Therein, assigning an object class to a bounding box may be understood such that a corresponding confidence value or probability for the object identified within the bounding box being of the corresponding object class is provided. For example, the algorithm may provide such a confidence value or probability for each of the object classes for a given bounding box. Assigning the object class may for example include selecting or providing the object class with the largest confidence value or probability. Alternatively, the algorithm can specify only the bounding boxes without assigning a corresponding object class.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Computer vision algorithms may be used, which may also be denoted as machine vision algorithms or algorithms for automatic visual perception, may be considered as computer algorithms for performing a visual perception task automatically. A visual perception task, also denoted as computer vision task, may for example be understood as a task for extracting visual information from image data. In particular, the visual perception task may in several cases be performed by a human in principle, who is able to visually perceive an image corresponding to the image data. In the present context, however, visual perception tasks are performed automatically without requiring the support by a human.

For example, a computer vision algorithm may be understood as an image processing algorithm or an algorithm for image analysis, which is trained using machine learning and may for example be based on an artificial neural network, in particular a convolutional neural network.

For example, the computer vision algorithm may include an object detection algorithm, an obstacle detection algorithm, an object tracking algorithm, a classification algorithm, a segmentation algorithm, and/or a depth estimation algorithm.

Corresponding algorithms may analogously be performed based on input data other than images visually perceivable by a human. For example, point clouds or images of infrared cameras et cetera may also be analyzed by means of correspondingly adapted computer algorithms. Strictly speaking, however, the corresponding algorithms are not visual perception algorithms since the corresponding sensors may operate in domains, which are not perceivable by the human eye, such as the infrared range. Therefore, here and in the following, such algorithms are denoted as perception or automatic perception algorithms. Perception algorithms therefore include visual perception algorithms, but are not restricted to them with respect to a human perception. Consequently, a perception algorithm according to this understanding may be considered as computer algorithm for performing a perception task automatically, for example, by using an algorithm for sensor data analysis or processing sensor data, which may, for example, be trained using machine learning and may, for example, based on an artificial neural network. Also the generalized perception algorithms may include object detection algorithms, object tracking algorithms, classification algorithms and/or segmentation algorithms, such as semantic segmentation algorithms.

In case an artificial neural network is used to implement a visual perception algorithm, a commonly used architecture is a convolutional neural network, CNN. In particular, a 2D-CNN may be applied to respective 2D-camera images. Also for other perception algorithms, CNNs may be used. For example, 3D-CNNs, 2D-CNNs or 1D-CNNs may be applied to point clouds depending on the spatial dimensions of the point cloud and the details of processing.

The output of a perception algorithm depends on the specific underlying perception task. For example, an output of an object detection algorithm may include one or more bounding boxes defining a spatial location and, optionally, orientation of one or more respective objects in the environment and/or corresponding object classes for the one or more objects. An output of a semantic segmentation algorithm applied to a camera image may include a pixel level class for each pixel of the camera image. Analogously, an output of a semantic segmentation algorithm applied to a point cloud may include a corresponding point level class for each of the points. The pixel level classes or point level classes may, for example, define a type of object the respective pixel or point belongs to.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

Therefore the drawings show in:
- FIG 1: a schematic block diagram according to the embodiment of a remote augmented-reality-based inspection system; and
- FIG 2: a schematic flow chart according to the embodiment of the method.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

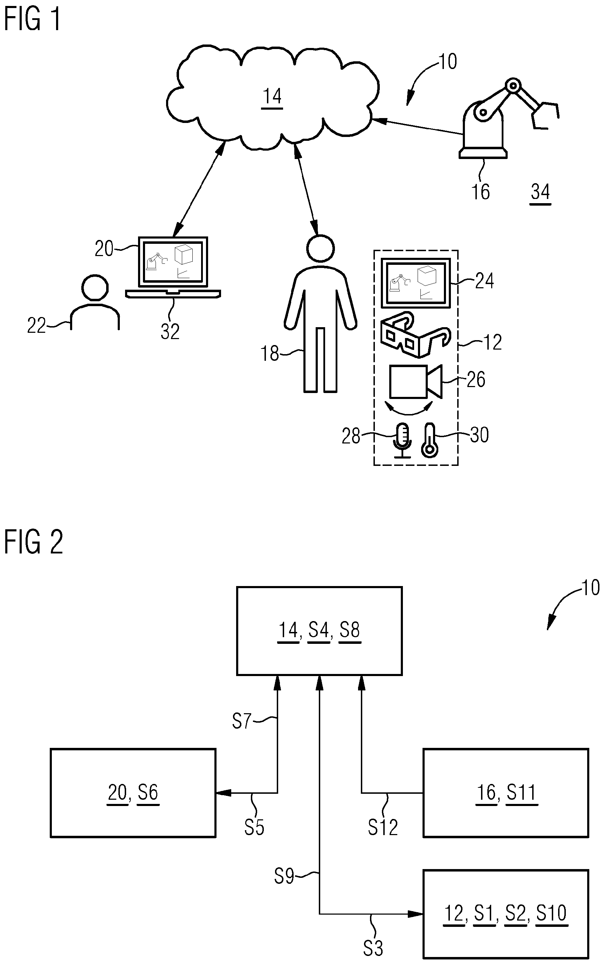

FIG 1 shows a schematic block diagram according to an embodiment of a remote augmented-reality-based inspection system 10. The remote augmented-reality-based inspection system 10 comprises at least one augmented reality device 12 and at least one electronic computing device 14, which is shown as a cloud-server.

Furthermore an object 16, for example a machine, is shown. Furthermore a technician 18, which is on-site the object 16, in particular in surroundings 34 is shown. Furthermore, a remote computer 20 for a remote inspector 22 is shown. The remote computer 20 is in particular connected to the electronic computing device 14.

Furthermore, FIG 1 shows, that the augmented reality device may comprise a display device 24, a first capturing device 26, which is in particular a 360° camera, a second capturing device 28, in particular a microphone device, and a third capturing device 30, which is for example a temperature sensor.

In particular it is shown, that the object 16 maybe connected to the electronic computing device 14. Furthermore, the augmented-reality device 12 is connected to the electronic computing device 14. Furthermore, the remote computer 20 is connected to the electronic computer device 14.

FIG 2 shows a schematic flow chart according to an embodiment of the method. In particular FIG 2 shows a first step S1, wherein an augmented reality perception and corresponding calculations are performed. In a second step S2 the augmented reality is provided for the electronic computer device 14. In a third step S3 the captured surroundings 20 are transmitted to the electronic computing device 14. In a fourth step S4 the captured surroundings 20 are stored in a storing device of the electronic device 14 and are provided for the remote computer 20. In a fifth step S5 the captured surroundings 20 are transmitted to the remote computer 20. In a sixth step S6 an input of the remote inspector 20 is captured, and the input is provided for the electronic computing device 14. In a seventh step S7 the information about the input is transmitted to the electronic computing device 14. In an eighth step S8 the received input is consolidated and stored in the storing device. In a ninth step S9 the input is transmitted from the electronic computing device 14 to the augmented reality device 12. In a tenth step S10 the input is visualized for the technician 18 on-site.

Furthermore, FIG 2 shows, that from the object 16 an eleventh step S11 is provided, wherein a current parameter of the object 16 is captured by the object 16 and transmitted in an twelfth step S12 to the electronic computing device 14.

In particular, according to the embodiment, a method for operating the remote augmented-reality-based inspection system 10 is provided. The surroundings 34 of the augmented reality device 12 are captured with at least one object 16 in the surroundings 34, wherein the surroundings 34 are captured in a 360° angle. The captured surroundings 34 are transmitted to the electronic computing device 14. The transmitted surroundings 34 are provided for a remote inspection of the at least one object 16 for the remote inspector 22, in particular for the remote computer 20, by the electronic computing device 14.

In particular, the provided surroundings 34 are presented for the remote inspector 22 independently of a current capturing angle of a capturing device, for example the camera, of the augmented reality device 12. Furthermore, additionally at least one characterising parameter of the at least one object 16 may be captured by the augmented reality device 12, for example the temperature of the object 16, and transmitted with the captured surroundings 34. Furthermore, an input of the remote inspector 22 is captured by an input device 32, in particular at the remote computer 20, and the input is transmitted to the augmented reality device 12 by the electronic computing device 14. In particular, the input is displayed on the augmented reality device 12 as an overlay of the displayed surroundings 34.

According to an embodiment a current depth information of surroundings 34 is captured by the augmented reality device 12 and the current depth information is transmitted to the electronic computing device 14. Furthermore, a current temperature in the surroundings 34 is captured by the augmented reality device 12 and the current temperature is transmitted to the electronic computing device 14. Furthermore, a current sound in the surroundings 34 is captured by the augmented reality device 12 and the current sound is transmitted to the electronic computing device 14. Furthermore, a current vibration information of the at least one object 16 is captured by the augmented reality device 12 and the current vibration information is transmitted to the electronic computing device 14.

In another embodiment a further input of the remote inspector 22 is captured by the input device 32, in particular the remote computer 20, and the further input is transmitted to the at least one object 16 by the electronic computing device 14. For example, a setting of the object 16 maybe adapted by the remote inspector 22.

In particular FIG 2 shows that the augmented reality device 12 performs augmented reality corresponding action in particular in a 360° video stream. In particular, for example the augmented reality device 12 may perform an anchor detection, motion tracking, for example based on SLAM (simultaneous location and mapping), temperature, as well as plane and depth detection. Furthermore, light estimation and augmented reality-overlay handling is performed by the augmented reality device 12. In particular, according to the 360° detection of the surroundings 36, anchor-detection and motion-tracking is more accurate.

The augmented reality device 12 may generate augmented reality-meta data to the live stream, for example a pose of the augmented reality device 12, video streams, position and the size of the object 16, augmented reality-overlays to the two dimensional video pictures, in particular to every frame-key-frame. In particular all the data is synchronised via video-time stamps.

The augmented reality device 12 transmits a live video including augmented reality-meta data to the electronic computing device 14, in particular to the cloud server. Optionally further data, for example a heat map, a sound map or furthermore can be transmitted to the electronic computing device 14. Furthermore, the object 16 may provide an object-monitoring system and may provide the current parameter by itself to the electronic computing device 14.

The electronic computing device 14 stores all the data and comprises APIs, which allows to download the for example video stream live or offline for the remote computer 20. The remote computer 20 downloads all the relevant data, for example the video stream, the augmented reality-meta data and further sensor data. The remote computer 20 is rendering the augmented reality view depending on the selected points and allows interactions with the augmented reality-view via the augmented reality-meta data.

The remote inspector 22 can choose a 360°-camera-direction. Objects 16 maybe remotely selected/annotated over the augmented reality and therefore hints for the technician 18 can be provided, in particular in an augmented reality-visualisation. The action is transmitted via the electronic computing device 14 to the augmented reality device 12 for the technician 18 and can be visualised on the augmented reality device 12. Furthermore, the remote inspector 20 can insert or hide further information for the technician 18.

In particular, today's remote inspections mainly consist of video conferencing between on-site technicians and the remote specialist, who talk to each other while a live video stream of the inspection is transmitted. The remote specialist is very limited in terms of visualisation of linked data and interaction possibilities. According to the shown invention the remote inspector 22 is enabled to use augmented reality applications as if he were on-site. The remote inspector 22 shows/hides augmented reality overlays, has quick access to plant data, and may have the ability to highlight objects/overlays on the augmented reality device 12 from the on-site technician 18. This enables the remote inspector 22 to better assess the situation on-site and to guide or support the on-site technician 18 more effectively, for example the remote inspector 22 has the ability to a remote-navigation to relevant objects 16 via for example arrows/notes on the on-site technicians display device 24. In addition, the remote inspector 22 can interactively examine specific features in a so called time machine mode by fast-forwarding/rewinding or passing the video stream. In particular, the time machine mode allows for a fluid, interactive experience.

## Claims

1. A method for operating a remote augmented-reality-based inspection system (10), comprising the steps of:
- capturing surroundings (34) of an augmented reality device (12) of the remote augmented-reality-based inspection system (10) with at least one object (16) in the surroundings (34) by the augmented reality device (12), wherein the surroundings (34) are captured in a 360° angle;
- transmitting the captured surroundings (36) to an electronic computing device (14) of the remote augmented-reality-based inspection system (10); and
- providing the transmitted surroundings (34) for a remote inspection of the at least one object (16) for a remote inspector (22) by the electronic computing device (14).

2. A method according to claim 1, **characterized in that** the provided surroundings (34) are presented for the remote inspector (22) independently of a current capturing angle of a capturing device (24) of the augmented reality device (12).

3. A method according to claims 1 or 2, **characterized in that** additionally at least one characterizing parameter of the at least one object (16) is captured by the augmented reality device (12) and transmitted with the captured surroundings (34) .

4. A method according to any one of claims 1 to 3, **characterized in that**
an input of the remote inspector (22) is captured by an input device (32) of the remote augmented-reality-based inspection system (10) and the input is transmitted to the augmented reality device (12) by the electronic computing device (14).

5. A method according to claim 4, **characterized in that** the input is displayed on the augmented reality device (12) as an overlay of the displayed surroundings (34).

6. A method according to any one of claims 1 to 5, **characterized in that**
additionally a current temperature in the surroundings (34) is captured by the augmented reality device (12) and the current temperature is transmitted to the electronic computing device (14).

7. A method according to any one of claims 1 to 6, **characterized in that**
additionally a current depth information of the surroundings (34) is captured by the augmented reality device (12) and the current depth information is transmitted to the electronic computing device (14).

8. A method according to any one of claims 1 to 7, **characterized in that**
additionally a current sound in the surroundings (34) is captured by the augmented reality device (12) and the current sound is transmitted to the electronic computing device (14).

9. A method according to any one of claims 1 to 8, **characterized in that**
additionally a current vibration information of the at least one object (16) is captured by the augmented reality device (12) and the current vibration information is transmitted to the electronic computing device (14).

10. A method according to any one of claims 1 to 9, **characterized in that**
the transmitted surroundings (34) are stored in a storing device for a remote inspection in the future.

11. A method according to any one of claims 1 to 9, **characterized in that**
the at least one object (16) transmits at least one current parameter of itself to the electronic computing device (14) and the at least one current parameter is provided for the remote inspector (22).

12. A method according to any one of claims 1 to 9, **characterized in that**
a further input of the remote inspector (22) is captured by an input device (32) of the remote augmented-reality-based inspection system (10) and the further input is transmitted to the at least one object (16) by the electronic computing device (14).

13. A computer program product comprising program code means for performing a method according to any one of claims 1 to 12.

14. A computer-readable storage medium comprising at least one computer program product according to claim 13.

15. A remote augmented-reality-based inspection system (10), comprising at least one augmented reality device (12) and one electronic computing device (14), wherein the remote augmented-reality-based inspection system (10) is configured for performing a method according to any one of claims 1 to 12.
